# EUROPÄISCHE PATENTSCHRIFT

(11) **EP 1 343 284 B1**
(45) Veröffentlichungstag und Bekanntmachung des Hinweises auf die Patenterteilung: **10.12.2008**
(21) Anmeldenummer: 03001908.7
(22) Anmeldetag: 30.01.2003
(51) Int. Cl.: H04L 25/03

(54) **Schaltungsanordnung zur gezielten Bitlängenmanipulation für eine serielle Datenübertragung**
Circuit arrangement for targetted bit-length manipulation for a serial data transmission
Arrangement de circuit pour la manipulation ciblée de longueur de bit pour une transmission sérielle de données

(30) Priorität: 07.03.2002 DE 10210003
(43) Veröffentlichungstag der Anmeldung: 10.09.2003
(73) Patentinhaber: PHOENIX CONTACT GmbH & Co. Kg, 32825 Blomberg (DE)
(72) Erfinder: Hoffmann, Michael, 33818 Leopoldshöhe (DE)
(74) Vertreter: Herden, Andreas F.

(56) Entgegenhaltungen:
- DE-A1- 3 438 369
- US-A- 4 873 704

## Beschreibung

Die Erfindung betrifft eine Schaltungsanordnung zur gezielten Bitlängenmanipulation eines Senders zur seriellen Datenübertragung. Die Schaltungsanordnung ist besonders für integrierte digitale Logikbausteine geeignet.

Bei der Weiterentwicklung serieller Bussysteme kommt es bei der Erhöhung der Übertragungsrate oder Erhöhung der maximalen Leitungslängen zu Verzerrungen der Bitlängen auf den Leitungen, die einen immer größeren Einfluss auf die Übertragungsqualität nehmen. Besonders für die serielle Datenübertragung über Lichtwellenleiter musste man bei erhöhter Datenrate ein qualitativ hochwertigeres Übertragungsmedium verwenden. Auch Entzerrungen am Empfänger und aufwendige Schaltungsanordnungen zur Rückgewinnung des seriellen Datenstromes sind unter anderem aus DE 33 35 418 A1 oder De 198 55 707 A1 oder auch US 4 873 704 bekannt. Eine weitere Möglichkeit zur Verbesserung der Übertragungsqualität ist eine Vorverzerrung des seriellen Datensignals bereits im Sender vorzunehmen. Um eine möglichst feine zeitliche Abstufung der Vorverzerrung zu gewährleisten, ist eine hohe Teilbitauflösung erforderlich. Nachteilig hierbei ist jedoch, dass in digitalen Schaltkreisen eine erhöhte Teilbitauflösung zur Generierung eines Bits eine erhöhte Taktrate erfordert. Alle zur Generierung eines Teilbits verwendeten Komponenten der Schaltungsanordnung müssen vom ihrem Zeitverhalten diese schnellen internen Schaltzeiten aufweisen.

Aus DE 33 35 418 A1 ist eine Empfangseinrichtung für eine bitserielle asynchrone Datenübertragung bekannt. Eine Messvorrichtung, welche aus digitalen Logikelementen bestehen und zu einer Laufzeitkette verschaltet sind, dient zur Feststellung des empfangenen Datensignals im zeitlichen Bezug zu einem lokalen Takt des Empfängers. Eine Auswerteeinrichtung, ein sogenannter Prioritätsencoder leitet entsprechend Steuersignale ab, damit die Datenbits jeweils phasenrichtig abgerufen werden. Hierfür ist die Phasenlage des lokalen Taktes zum empfangenen Takt mittels einer Taktsteuerung in die gewünschte zeitliche Position zu bringen. Die hier beschriebene Taktsteuerung stellt jedoch sehr hohe Anforderungen im Bezug auf Signallaufzeiten an die Logikgatter, mittels denen die Taktsteuerung implementiert ist. Die hohen Anforderungen im Bezug auf Signallaufzeiten können in der Regel nicht in programmierbaren digitalen Logikbausteihen (FPGAs) bereitgestellt werden.

In DE 198 55 707 A1 ist eine Vorrichtung zur Bereitstellung eines verzerrungsarmen Empfangssignals für Übertragungsraten mit hohen Bitraten beschrieben. Im Empfänger findet eine Analyse des empfangenen Signals statt, wobei anhand des Ergebnisses der Analyse eine im Empfänger vorhandene Entzerrungseinheit die Bits des ausgebenden Datenstrom erzeugt. Die Analyse des empfangenen Signals ist eine recht aufwendige Einrichtung, da die Wertigkeit der jeweiligen Bits anhand mehrerer Messpunkten vorgenommen wird. Sogenannte Monitore nehmen Messpunkte und steuern anhand der Messergebnisse die Entzerrungseinheit an. Auch diese Vorrichtung zur Bereitstellung eines verzerrungsarmen Empfangssignals erfordert recht aufwendige und schnell reagierende Einrichtungen, welche die Analyse des empfangenen Signals vornehmen und daraus resultierend die Entzerrungseinheit ansteuern. Zur Integration in programmierbaren digitalen Logikbausteinen (FPGAs) ist die Realisierung einer solchen Vorrichtung zur Bereitstellung eines verzerrungsarmen Empfangssignals nicht oder nur mit hohem schaltungstechnischem Aufwand realisierbar. Für alle Entzerrungseinrichtungen in Empfängern ist ein weiterer Nachteil, dass ab einen bestimmten Grad der Verzerrung ein Erkennen des Empfangssignals und somit eine plausible Entzerrung nicht mehr möglich ist.

In "High Speed Kommunikation mit RS-422/485, elektronik Industrie, 9 2001" ist eine Vorverzerrung eines Datensignals im Sender beschrieben. In der zeitlichen Vorverzerrung muss der sogenannte Systemtakt ein ganzzahliges vielfaches des Bittaktes (Datenrate) betragen. Daraus folgernd ist die kleinste Teilbitlänge direkt vom Systemtakt abhängig, wodurch bei der Erfordernis von sehr kurzen Teilbits zur genauen Anpassung der Bitlängen an die Übertragungsstrecke ein hoher Systemtakt erforderlich ist.

In "Virtex-II Platform FPGA Handbook, Xilinx, 6. December 2000" ist eine parametrierbare Taktgenerierung innerhalb eines FPGAs beschrieben. Diese Taktgenerierung ist in der Lage, mehrere Taktsignale mit einer Taktrate in unterschiedlichen Phasenlagen bereitzustellen. Mit dieser parametrierbaren Taktgenerierung können sogar 4 Taktsignale mit gleicher Taktrate aber unterschiedlicher Phasenlage abgegriffen werden. Die eingestellte Phasenlage des jeweiligen Taktsignals kann jedoch nur vor der Inbetriebnahme initialisiert, das heißt, voreingestellt werden und kann während des Betriebes nicht verändert werden. Eine im Betrieb steuerbare Phasenlage kann nur in einzelnen Schritten verändert werden, so dass eine Manipulation eines Bits um einen zeitlich längeren Bereich nicht möglich ist.

Der Erfindung liegt die Aufgabe zugrunde, eine einfache kostengünstige Schaltungsanordnung zur gezielten Bitlängenmanipulation für eine serielle Datenübertragung zur Verfügung zu stellen. Die Schaltungsanordnung erzeugt dabei den zu sendenden Datenstrom, bei welchem die auszugebenden Bits einer gezielten Bitlängenmanipulation unterworfen wurden. Die Schaltungsanordnung wird dabei mittels hochintegrierten programmierbaren Bausteinen FPGAs mit digitalen Logikelementen realisiert, wobei die Anforderungen an den sogenannten internen Systemtakt nicht sehr hoch sind, so dass mit den FPGA-internen Laufzeiten die Schaltungsanordnung bereitgestellt werden kann.

Die Aufgabe wird erfindungsgemäß durch die im Anspruch 1 angegebenen Merkmale gelöst.
Der zu sendende serielle Datenstrom wird in ein sogenanntes History-Register mit dem für die Datenrate relevanten Bittakt mit dem Abtasttakt der Datenrate seriell eingegeben. Eine Auswerteeinheit analysiert anhand der Bitzustände im History-Register den auszugebenden Datenstrom. Die Auswerteeinheit gibt wiederum die Einzelnen Teilbits vor, welche mit dem um ein vielfaches höheren Systemtakt als serieller Datenstrom auf die Leitung oder nicht näher beschriebenen Signalumsetzer ausgibt. Die Regeln, um wie viele Teilbits das jeweilige Bit manipuliert werden soll, sind als Werte in der Auswerteeinheit hinterlegt oder werden von einer hier nicht beschriebenen anderen Einrichtung zur Verfügung gestellt. Es sind mehrere Teilbit-Registerketten vorgesehen, wobei jede Registerkette gegenüber der nächsten Teilbit-Registerkette mit einem phasenverschobenen Systemtakt getaktet wird. Im einfachsten Fall hat die erfindungsgemäße Schaltungsanordnung zwei Teilbit-Registerketten, wobei die erste mit dem Systemtakt, die zweite mit dem invertierten Systemtakt getaktet wird, wodurch eine Phasenverschiebung um 180 Grad entsteht. Vor jedem auszugebenden Bit werden beide Teilbit-Registerketten mit dem aus der Auswerteeinheit vorgegebenen parallelen Datenvektor geladen. Durch eine sogenannte versetzte Anordnung der Teilbits in den Teilbit-Registerketten erfolgt die Teilbit-Ausgabe immer nach einer halben Periodendauer des Systemtaktes. Als versetzte Anordnung ist in diesem Fall gemeint, dass beispielsweise in der ersten Teilbit-Registerkette beginnend mit Bit 0 jedes zweite weitere Teilbit der ersten Teilbit-Registerkette parallel vorgeladen wird und in der zweiten Teilbit-Registerkette beginnend mit Bit 1 jedes zweite weitere Teilbit der zweiten Teilbit-Registerkette parallel vorgeladen wird. Eine Gatter als kombinatorische Verknüpfung des seriellen Ausgangs der ersten Teilbit-Registerkette mit dem seriellen Ausgang der zweiten Registerkette erzeugt den auszugebenden, vorverzerrten seriellen Datenstrom. Das Gatter ist das einzige interne Schaltungselement, welches ein schnelles Reaktionsvermögen, bzw. keine zu großen Laufzeitunterschiede für die Ausgabe eines _{"}0"- Zustandes gegenüber eines _{"}1"- Zustandes aufweisen muss.

### Bezugzeichenliste

- 1:: History-Register
- 2:: Serielle Datenstrom Ser_Data
- 3:: CLK_B, Abtasttakt für seriellen Datenstrom
- 4:: History Bitvektor
- 5:: Steuereinheit
- 6:: CLK_TB, Systemtakt
- 7:: Teilbitvektor TBO bis TB7
- 8:: Biterzeuger
- 9:: Erzeugter Datenstrom Ser_Data_Out
- 10:: Steuersignal "Load" zur Teilbitvektor Übernahme
- 11:: Multiplexer
- 12a-h: Register
- 13:: Multiplexer
- 14a-d:: Register der ersten Registerkette
- 15a-d:: Register der zweiten Registerkette
- 16:: serieller Ausgang der ersten Registerkette
- 17:: serieller Ausgang der zweiten Registerkette
- 18:: Gatter
- 19:: CLK_TB_180, um 180 Grad phasenverschobener Systemtakt
- 20:: Bitlänge
- 21:: erste "1" Verkürzung
- 22:: zweite "1" Verkürzung
- 23:: Startzeitpunkt

### Überschrift der Figuren:

Fig. 1: zeigt die in einer Übersicht die funktionalen Einheiten zur Bitlängenmanipulation eines seriellen Datenstromes.
Fig. 2: zeigt eine Schaltungsanordnung zur manipulierten Biterzeugung in herkömmlicher Weise (Stand der Technik).
Fig. 3: zeigt beispielhaft die erfindungsgemäße Schaltungsanordnung zur manipulierten Biterzeugung.
Fig. 4: zeigt in einem Timing-Diagramm das Zeitverhalten der Signale in der erfindungsgemäßen Schaltungsanordnung.

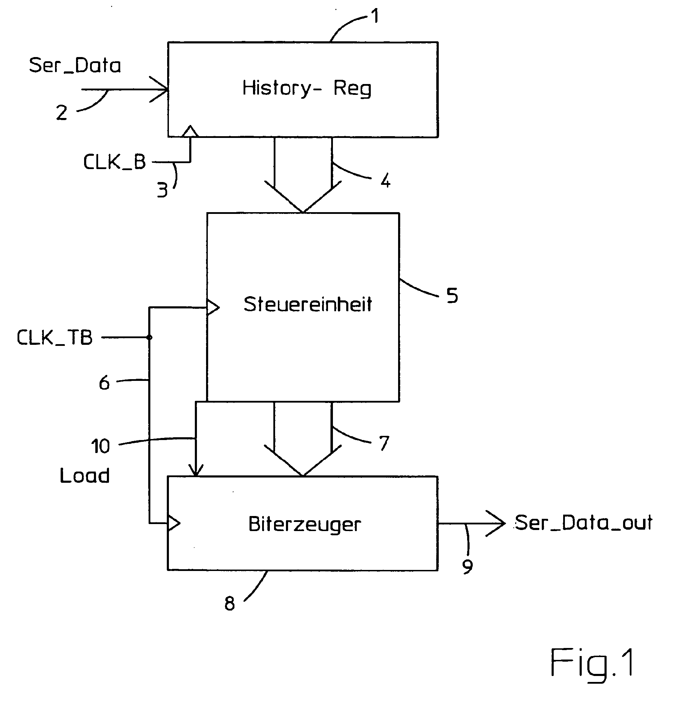

In **FIG. 1** sind die funktionalen Einheiten für eine Bitlängenmanipulation in einem Sender für eine serielle Datenübertragung dargestellt. Der zu sendende serielle Datenstrom **2** wird mit seinem Abtasttakt CLK_B **3** bitweise in das History-Register **1** eingelesen. Der Abtasttakt C1K_B **3** entspricht in seiner Taktfrequenz der Datenrate des seriellen Datenstromes **2**. Mit jedem eingelesenen Bit im History-Register **1** erhält die Steuereinheit **5** den sogenannten History Bitvektor **4**, welcher die Bitzustände des momentan zu sendenden Bis die jeweiligen Zustände der vorherigen und nachfolgenden Bits enthält. Anhand der jeweiligen Zustände der vorherigen und nachfolgenden Bits legt die Auswerteeinheit die Bitlänge des aktuell zu senden Bits fest und übergibt diese Information mit Hilfe des Teilbitvektors **7** an den Biterzeuger **8**. Das Steuersignal _{"}Load" **10** aktiviert im zeitlichen Abstand der Datenrate die Übernahme des Teilbitvektors **7** in den Biterzeuger **8**. Der Biterzeuger **8** benötigt für die Erzeugung der einzelnen Bits für den auszugebenden Datenstrom "Ser_Data_Out" **9** einen höheren Systemtakt CLK_TB **6**, bei dem die Taktperiode der Teilbitlänge entspricht. Der höhere Systemtakt CLK_TB **6** hat dabei beispeilsweise die vierfache Taktfrequenz gegenüber dem Abtasttakt CLK_B **3**.

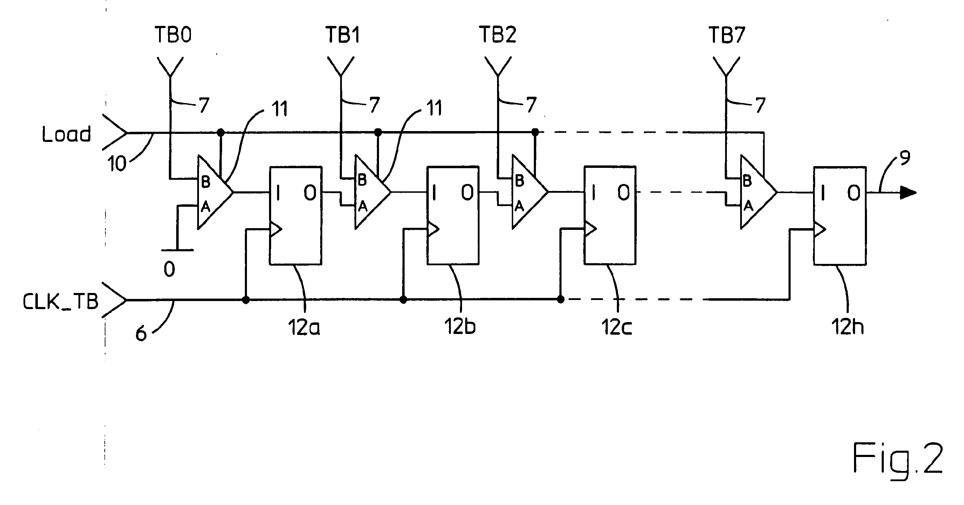

In **Fig. 2** ist eine Schaltungsanordnung zur Erzeugung der Bits für den auszugebenden Datenstrom **9** dargestellt, in der beispielsweise aus acht Teilbits das jeweils auszugebende Bit erzeugt wird. Ein aktives Steuersignal "Loa'd" **10** schaltet die acht Multiplexer **11** zum Schalterzustand "B", so dass danach jeweils das zugehörige Teilbit am Eingang jedes Registers **12a-h** zum Laden dieses Registers anliegt. Nach einem weiteren Systemtakt CLK_TB 6 werden alle acht Multiplexer **11** in die Position "A" geschaltet, so dass der Ausgang des ersten Registers **12a** mit dem Eingang des zweiten Registers **12b**, der Ausgang des zweiten Registers **12b** mit dem Eingang des dritten Registers **12c** und so weiter verbunden sind. Mit dem Systemtakt CLK_TB 6 werden dann alle acht Register **12a-h** kontinuierlich weiter getaktet, wodurch der Inhalt der einzelnen Register seriell als auszugebender Datenstrom **9** ausgegeben wird. Der jeweilige Zustand des Ausgangs des achten Registers **12h** ergibt den auszugebenden seriellen Datenstrom **9**.
Dabei muss die Schaltungsanordnung in diesem Beispiel jedoch in der Lage sein, die Signale mit der 8-fachen Taktrate gegenüber der Taktrate des Abtasttaktes CLK_B **3** für den seriellen Datenstrom zu verarbeiten. Die Implementierung dieser Schaltungsanordnung in programmierbare digitalen Logikbausteine (FPGAs) ist sehr schwierig, da die Verarbeitungsgeschwindigkeit der FPGAs bei höheren Datenraten zu gering ist. Beispielsweise kann bei einer Taktfrequenz des Systemtaktes von 16 MHz eine Datenübertragungsrate von 2 MBit/s bereitgestellt werden.

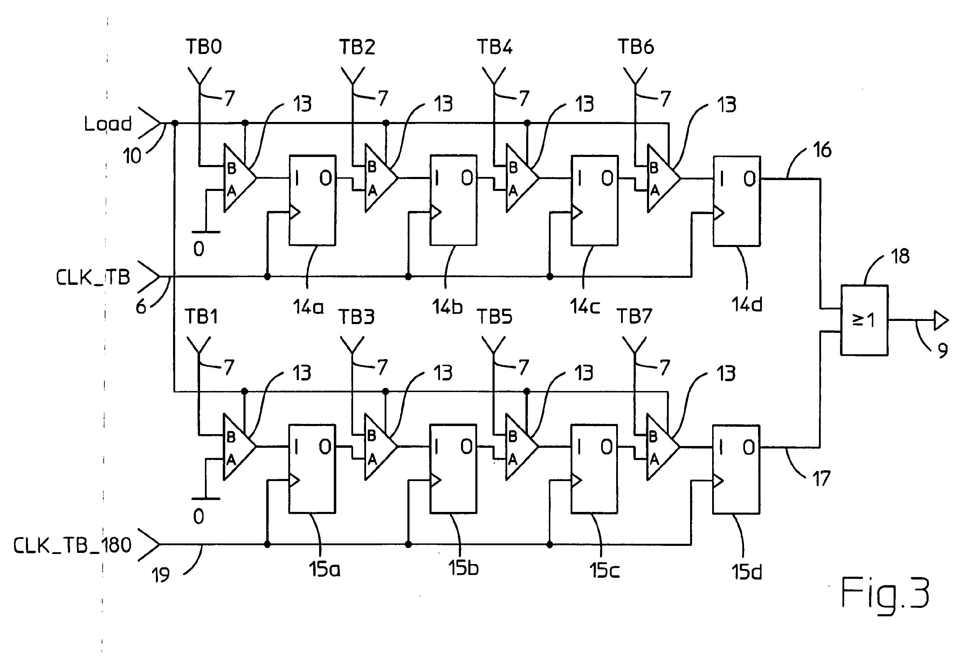

Um bei gleicher Anzahl von Teilbits die Datenrate des seriellen Datenstromes zu erhöhen, werden, wie in **Fig. 3** dargestellt die Registerketten in zwei oder mehrere Registerketten unterteilt, wobei die Register jeder Registerkette mit einem Systemtakt in unterschiedlicher Phasenlage getaktet wird. Die folgende Beschreibung bezieht sich dabei auf zwei Registerketten, jedoch kann die Schaltungsanordnung mit mehreren Registerketten realisiert werden. Die erste Registerkette besteht aus den Registern **14a-d**, die mit dem Systemtakt CLK_TB **6** getaktet wird. Die zweite Registerkette besteht aus den Registern **15a-d**, die mit dem um 180 Grad phasenverschobenen Systemtakt CLK_TB_180 **19** getaktet wird. Das erste Register **14a** der ersten Registerkette wird mit dem Teilbit TB0 geladen, das zweite Register **14b** mit dem Teilbit TB2, das dritte Register **14c** mit dem Teilbit TB4, das vierte Register **14d** mit dem Teilbit TB6. Das erste Register **15a** der zweiten Registerkette wird mit dem Teilbit TB1 geladen, das zweite Register **15b** mit dem Teilbit TB3, das dritte Register **15c** mit dem Teilbit TB5, das vierte Register **15d** mit dem Teilbit TB7. Das parallele Laden aller Register erfolgt durch die Umschaltung der Multiplexer **13** in die Schalterstellung "B". Die Ansteuerung der Multiplexer erfolgt über das Steuersignal "Load" **10**. Mit dem Gatter **18** als kombinatorische ODER-Verknüpfung des seriellen Ausganges **16** der ersten Registerkette mit dem seriellen Ausgang **17** der zweiten Registerkette wird der auszugebende manipulierte Datenstrom **9** erzeugt. Die Register der ersten und zweiten Registerkette müssen dabei alle Signale nur mit der 4-fachen Datenrate des seriellen Datenstromes verarbeiten. Bei einem Systemtakt von 16 MHz ist damit eine Datenrate von 4 Mbit/s zu generieren bei einer Anzahl von 8 Teilbits pro Datenbit.

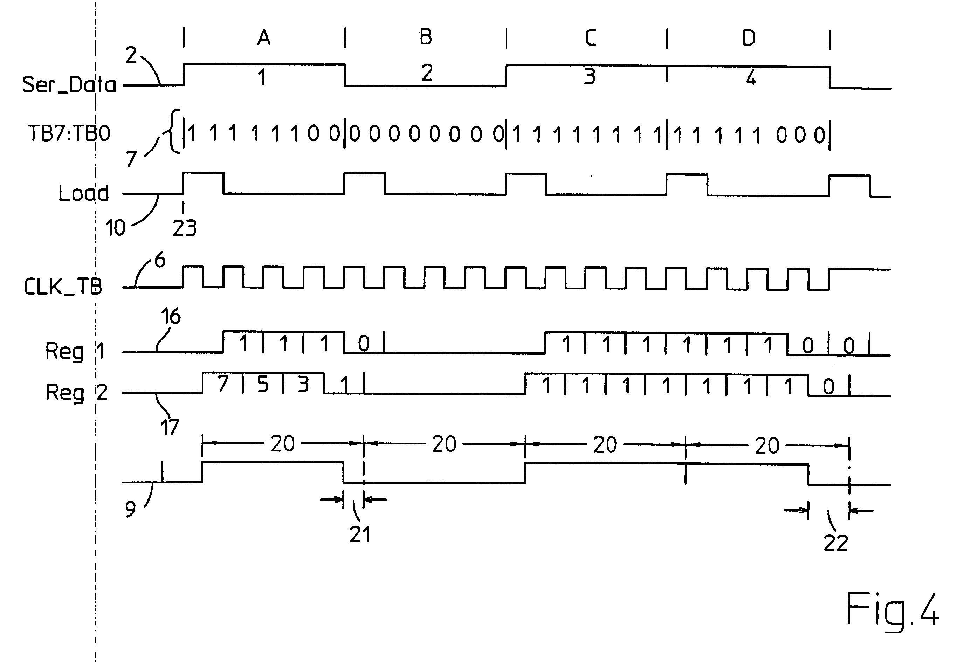

In **Fig. 4** ist in einem Timing-Diagramm die Funktionsweise der Ausgabe des manipulierten Datenstromes **9** in Abhängigkeit der vorgegebenen Teilbitvektoren **7** TBO ... TB7 dargestellt. Der Übersichtlichkeit halber ist nur der Takt für die Register der ersten Teilbit-Registerkette dargestellt, somit werden mit der positiven Täktflanke die Register der ersten Teilbit-Registerkette getaktet, mit der negativen Taktflanke die Register der zweiten Teilbit-Registerkette. Zum Startzeitpunkt **23** wird der Teilbitvektor in die Register **14a-14d** und **15a-15d** geladen. Der "1" Zustand des Steuersignals "Load" **10** schaltet die Multiplexer in die Position "B", wodurch das jeweilige Teilbit **7** am Eingang des zugehörigen Registers **14a-d**, **15a-d** anliegt. Mit der ersten negativen Taktflanke des Taktsignals **6** CLK_TB wird der Zustand des Teilbits TB7 auf den seriellen Ausgang **17** der zweiten Registerkette ausgegeben. Mit der ersten positiven Taktflanke des Taktsignals **6** CLK_TB wird der Zustand des Teilbits TB6 auf den seriellen Ausgang **16** der ersten Registerkette ausgegeben. Danach wird für die Dauer der verbleibenden Bitlänge das Steuersignal "Load" **10** zur Teilbitvektor Übernahme inaktiviert, wodurch die Hintereinanderschaltung der Register der ersten und der zweiten Registerkette jeweils ein Schieberegister bilden. Mit der zweiten negativen Taktflanke des Taktsignals **6** CLK_TB wird der Zustand des Teilbits TB5 auf den seriellen Ausgang **17** der zweiten Registerkette ausgegeben. Mit der zweiten positiven Taktflanke des Taktsignals **6** CLK_TB wird der Zustand des Teilbits TB4 auf den seriellen Ausgang **16** der ersten Registerkette ausgegeben. Der Ausgang **9** des Gatters **18** ergibt sich aus der kombinatorischen ODER-Verknüpfung des seriellen Ausgangs **16** der ersten Registerkette mit dem seriellen Ausgang **17** der zweiten Registerkette. In der beispielhaften Schaltungsanordnung ergibt der "1"-Zustand auf einem der beiden seriellen Ausgänge **16**, **17** immer den "1"-Zustand auf den Ausgang **9** des Gatters **18**. Die kombinatorische Verknüpfung kann jedoch auch mit anderen Mitteln aufgebaut werden. Mit der dritten negativen Taktflanke des Taktsignals **6** CLK_TB wird der "1"-Zustand des Teilbits TB3 auf den seriellen Ausgang **17** der zweiten Registerkette ausgegeben. Mit der dritten positiven Taktflanke des Taktsignals **6** CLK_TB wird der "1"-Zustand des Teilbits TB4 auf den seriellen Ausgang **16** der ersten Registerkette ausgegeben. Mit der vierten negativen Taktflanke des Taktsignals **6** CLK_TB wird der "0"-Zustand des Teilbits TB1 auf den seriellen Ausgang **17** der zweiten Registerkette ausgegeben. Mit der vierten positiven Taktflanke des Taktsignals **6** CLK_TB wird der "0"-Zustand des Teilbits TB4 auf den seriellen Ausgang **16** der ersten Registerkette ausgegeben, wodurch ab diesem Zeitpunkt eine Verkürzung **21** des auszugebenden "1"-Zustandes erreicht wird. Mit der vierten positiven Taktflanke des Taktsignals **6** CLK TB wechselt auch der Zustand des Steuersignals "Load" **10** auf "1", wodurch die Multiplexer erneut in die Position "B" geschaltet werden, um den Teilbitvektor für das zweite auszugebende Bit zu laden. Das jeweilige Teilbit liegt danach am Eingang des zugehörigen Registers **14a-d**, **15a-d** an. Danach wiederholt sich die serielle Teilbitausgabe, wie eben beschrieben. Die zweite "1" Verkürzung **22** wird durch das Anlegen des dazugehörigen Teilbitvektors **7** erreicht. In diesem Fall erhalten die beiden ersten Register **14a** und **14b** der ersten Registerkette den Zustand "0" über die dazugehörigen Teilbits TB0 und TB2. Das erste Register **15a** der zweiten Registerkette erhält ebenfalls den Zustand "0" über das dazugehörigen Teilbit TB1. Die serielle Ausgabe der Zustände der Teilbits erfolgt in der oben beschriebenen Art und Weise. Jedes einzelne auszugebende Bit wird aus den vorgegebenen Teilbits **7** erzeugt. Mit der erfindungsgemäßen Schaltungsanordnung sind für jeden Bitzustand auch Manipulationen in Form anderer zeitlicher Zustandsfolgen der Teilbits möglich.

## Patentansprüche

1. Schaltungsanordnung zur Erzeugung einer gezielten Bitlängenmanipulation eines Senders zur Ausgabe eines seriellen Datenstromes, **dadurch gekennzeichnet, dass**
eine Steuereinrichtung (5) in Abhängigkeit der Bitzustände des jeweils momentan zu sendenden Bits und der jeweiligen Zustände der vorherigen und nachfolgenden Bits jeweils Teilbits als Teilbitvektor (7) vorgibt, wodurch die Bitlängen für den seriellen Datenstrom zur Ausgabe (9) auf die Leitung oder einen Signalumsetzer festgelegt werden, und
dass die Schaltungsanordnung mindestens zwei Teilbit-Registerketten (14a-d, 15a-d) zur Erzeugung der auszugebenden Bits umfasst, wobei die Ausgänge (16, 17) der jeweils letzten Register (14d, 15d) aller Teilbit-Registerketten mittels eines kombinatorischen Gatters (18) verknüpft sind.

2. Schaltungsanordnung nach Anspruch 1,
**dadurch gekennzeichnet,**
**dass** für jede Teilbit-Registerkette ein jeweils ein eigener Systemtakt (6, 19) vorgesehen ist.

3. Schaltungsanordnung nach Anspruch 1 oder 2,
**dadurch gekennzeichnet,**
**dass** bei der Verwendung von zwei Teilbit-Registerketten eine erste Teilbit-Registerkette mit einem nicht phasenverschobenen Systemtakt (6) getaktet wird und eine zweite Teilbit-Registerkette mit einem um 180 Grad phasenverschobenen Systemtakt (19) getaktet wird.

4. Schaltungsanordnung nach Anspruch 1 oder 2,
**dadurch gekennzeichnet,**
**dass** bei der Verwendung von vier Teilbit-Registerketten eine erste Teilbit-Registerkette mit einem nicht phasenverschobenen Systemtakt getaktet wird und eine zweite Teilbit-Registerkette mit einem um 90 Grad phasenverschobenen Systemtakt getaktet wird und eine dritte Teilbit-Registerkette mit einem um 180 Grad phasenverschobenen Systemtakt getaktet wird und eine vierte Teilbit-Registerkette mit einem um 270 Grad phasenverschobenen Systemtakt getaktet wird.

5. Schaltungsanordnung nach einem der Ansprüche 1 bis 4,
**dadurch gekennzeichnet,**
**dass** die Teilbit-Registerketten parallel mit dem vorgegebenen Wert des Teilbit-Vektors (7) geladen werden.

6. Schaltungsanordnung nach einem der Ansprüche 1 bis 5,
**dadurch gekennzeichnet,**
**dass** die Register (14a-d, 15a-d) der Teilbit-Registerketten parallel mit dem vorgegebenen Wert des Teilbit-Vektors (7) zu Beginn des jeweils auszugebenden Bits geladen werden.

7. Schaltungsanordnung nach einem der Ansprüche 1 bis 6,
**dadurch gekennzeichnet,**
**dass** mit einem Multiplexer (13) der Eingang eines Registers (14a-d, 15a-d) der Teilbit-Registerkette während des parallelen Ladens auf das jeweils vorgesehene Teilbit umgeschaltet wird.

8. Schaltungsanordnung nach einem der Ansprüche 1 bis 7,
**dadurch gekennzeichnet,**
**dass** mit einem Multiplexer (13) der Eingang eines Registers (14b-d, 15b-d) mit dem Ausgang des jeweils vorherigen Registers (14a-c, 15a-c) der Teilbit-Registerkette für die serielle Ausgabe der Teilbits umgeschaltet wird.

9. Schaltungsanordnung nach einem der Ansprüche 1 bis 8,
**dadurch gekennzeichnet,**
**dass** die Schaltungsanordnung mit Logikelementen im programmierbaren Digitalteil eines FPGA gebildet wird.

10. Schaltungsanordnung nach einem der Ansprüche 1 bis 8,
**dadurch gekennzeichnet,**
**dass** die Schaltungsanordnung mit den Logikelementen in einem kundenspezifischen Schaltkreis ASIC gebildet wird.

11. Schaltungsanordnung nach einem der Ansprüche 1 bis 8,
**dadurch gekennzeichnet,**
**dass** die Schaltungsanordnung aus einzelnen Standardlogikelementen gebildet wird.

## Claims

1. Circuit arrangement for generating a targeted bit length manipulation of a transmitter for outputting a serial data stream, **characterised in that** a control device (5) specifies in each case partial bits as a partial bit vector (7) in dependence upon the bit statuses of the bit to be transmitted at one particular moment, and upon the respective statuses of the previous and subsequent bits, whereby the bit lengths are established for the serial data stream for output (9) to the line or a signal converter, and **in that** the circuit arrangement comprises at least two partial bit register chains (14a-d, 15a-d) for generating the bits to be output, wherein the outputs (16, 17) of the respectively last registers (14d, 15d) of all partial bit register chains are linked by means of a combinatory gate (18).

2. Circuit arrangement as claimed in claim 1, **characterised in that** a dedicated system clock (6, 19) is provided for each partial bit register chain.

3. Circuit arrangement as claimed in claim 1 or 2, **characterised in that** when two partial bit register chains are used a first partial bit register chain is clocked with a non-phase-shifted system clock (6) and a second partial bit register chain is clocked with a system clock (19) which is phase-shifted by 180 degrees.

4. Circuit arrangement as claimed in claim 1 or 2, **characterised in that** when four partial bit register chains are used a first partial bit register chain is clocked with a non-phase-shifted system clock and a second partial bit register chain is clocked with a system clock which is phase-shifted by 90 degrees and a third partial bit register chain is clocked with a system clock which is phase-shifted by 180 degrees and a fourth partial bit register chain is clocked with a system clock which is phase-shifted by 270 degrees.

5. Circuit arrangement as claimed in any one of claims 1 to 4, **characterised in that** the partial bit register chains are loaded in parallel with the specified value of the partial bit vector (7).

6. Circuit arrangement as claimed in any one of claims 1 to 5, **characterised in that** the registers (14a-d, 15a-d) of the partial bit register chains are loaded in parallel with the specified value of the partial bit vector (7) at the beginning of the respective bit to be output.

7. Circuit arrangement as claimed in any one of claims 1 to 6, **characterised in that** a multiplexer (13) is used to switch the input of a register (14a-d, 15a-d) of the partial bit register chain during parallel loading onto the partial bit provided in each case.

8. Circuit arrangement as claimed in any one of claims 1 to 7, **characterised in that** a multiplexer (13) is used to switch the input of a register (14b-d, 15b-d) with the output of the respectively previous register (14a-c, 15a-c) of the partial bit register chain for the serial output of the partial bits.

9. Circuit arrangement as claimed in any one of claims 1 to 8, **characterised in that** the circuit arrangement is formed with logic elements in the programmable digital part of an FPGA.

10. Circuit arrangement as claimed in any one of claims 1 to 8, **characterised in that** the circuit arrangement is formed with the logic elements in a customer-specific ASIC circuit.

11. Circuit arrangement as claimed in any one of claims 1 to 8, **characterised in that** the circuit arrangement is formed from individual standard logic elements.

## Revendications

1. Agencement de circuit pour générer une manipulation ciblée de longueur de bit d'un émetteur pour la sortie d'un flux de données série, **caractérisé en ce qu'**un dispositif de commande (5) prédéfinit respectivement des bits partiels sous forme de vecteur à bit partiel (7) en fonction des états de bit du bit à envoyer au moment concerné et des états respectifs des bits antérieurs et des bits consécutifs, les longueurs de bit étant fixées pour le flux de données série pour la sortie (9) sur la ligne ou un convertisseur de signal, et
**en ce que** l'agencement de circuit comporte au moins deux chaînes de registre à bit partiel (14a-d, 15a-d) pour générer les bits à sortir, les sorties (16, 17) des derniers registres (14d, 15d) respectifs de toutes les chaînes de registre à bit partiel étant associées au moyen d'une grille (18) combinatoire.

2. Agencement de circuit selon la revendication 1,
**caractérisé en ce que**
une cadence propre du système (6, 19) est prévue pour chaque chaîne de registre à bit partiel.

3. Agencement de circuit selon la revendication 1 ou 2,
**caractérisé en ce que,**
si l'on utilise deux chaînes de registre à bit partiel, une première chaîne de registre à bit partiel est synchronisée avec une cadence de système (6) non déphasée et une seconde chaîne de registre à bit partiel est synchronisée avec une cadence de système (19) déphasée de 180 degrés.

4. Agencement de circuit selon la revendication 1 ou 2,
**caractérisé en ce que,**
si l'on utilise quatre chaînes de registre à bit partiel, une première chaîne de registre à bit partiel est synchronisée avec une cadence de système non déphasée et une seconde chaîne de registre à bit partiel est synchronisée avec une cadence de système déphasée de 90 degrés et une troisième chaîne de registre à bit partiel est synchronisée avec une cadence de système déphasée de 180 degrés et une quatrième chaîne de registre à bit partiel est synchronisée avec une cadence de système déphasée de 270 degrés.

5. Agencement de circuit selon l'une quelconque des revendications 1 à 4,
**caractérisé en ce que**
les chaînes de registre à bit partiel sont chargées parallèlement à la valeur prédéfinie du vecteur à bit partiel (7).

6. Agencement de circuit selon l'une quelconque des revendications 1 à 5,
**caractérisé en ce que**
les registres (14a-d, 15a-d) des chaînes de registre à bit partiel sont chargés parallèlement à la valeur prédéfinie du vecteur à bit partiel (7) au début du bit respectif à sortir.

7. Agencement de circuit selon l'une quelconque des revendications 1 à 6,
**caractérisé en ce que**
l'entrée d'un registre (14a-d, 15a-d) de la chaîne de registre à bit partiel est commutée avec un multiplexeur (13) pendant le chargement parallèle sur le bit partiel respectivement prévu.

8. Agencement de circuit selon l'une quelconque des revendications 1 à 7,
**caractérisé en ce que**
l'entrée d'un registre (14a-d, 15a-d) est commutée avec un multiplexeur (13) avec la sortie du registre (14a-c, 15a-c) respectivement antérieur de la chaîne de registre à bit partiel pour la sortie série des bits partiels.

9. Agencement de circuit selon l'une quelconque des revendications 1 à 8,
**caractérisé en ce que**
l'agencement de circuit est formé avec des éléments de logique dans la partie numérique programmable d'un FPGA.

10. Agencement de circuit selon l'une quelconque des revendications 1 à 8,
**caractérisé en ce que**
l'agencement de circuit est formé avec les éléments de logique dans un circuit ASIC spécifié au client.

11. Agencement de circuit selon l'une quelconque des revendications 1 à 8,
**caractérisé en ce que**
l'agencement de circuit est formé à partir d'éléments de logique standard individuels.
